# EUROPÄISCHE PATENTSCHRIFT

(11) **EP 3 602 762 B1**
(45) Veröffentlichungstag und Bekanntmachung des Hinweises auf die Patenterteilung: **28.07.2021**
(21) Anmeldenummer: 18713177.6
(22) Anmeldetag: 20.03.2018
(51) Int. Cl.: H02M 3/158, H02M 1/15

(54) **WECHSELRICHTER**
INVERTER
ONDULEUR

(30) Priorität: 22.03.2017 AT 502312017
(43) Veröffentlichungstag der Anmeldung: 05.02.2020
(73) Patentinhaber: EGSTON Power Electronics GmbH, 3730 Eggenburg (AT)
(72) Erfinder: KOLAR, Johann Walter, 8044 Zürich (CH); HUBER, Jonas Emanuel, 5600 Lenzburg (CH); KRISMER, Florian, 8954 Geroldswil (CH); NEUMAY, Dominik, 8003 Zürich (CH); PAPAMANOLIS, Panteleimon, CH-8051 Zürich (CH)
(74) Vertreter: Gibler & Poth Patentanwälte KG
(86) Internationale Anmeldenummer: PCT/EP2018/056970
(87) Internationale Veröffentlichungsnummer: WO 2018/172329

(56) Entgegenhaltungen:
- US-A1- 2003 026 111
- US-A1- 2003 026 111
- US-A1- 2015 062 984
- US-A1- 2015 062 984
- US-A1- 2015 270 789
- US-A1- 2015 270 789
- GE BAOMING ET AL: "Multiphase-Leg Coupling Current Balancer for Parallel Operation of Multiple MW Power Modules", IEEE TRANSACTIONS ON INDUSTRIAL ELECTRONICS, IEEE SERVICE CENTER, PISCATAWAY, NJ, USA, Bd. 61, Nr. 3, 1. März 2014 (2014-03-01), Seiten 1147-1157, XP011524895, ISSN: 0278-0046, DOI: 10.1109/TIE.2013.2258307 [gefunden am 2013-08-23]
- GE BAOMING ET AL: "Multiphase-Leg Coupling Current Balancer for Parallel Operation of Multiple MW Power Modules", IEEE TRANSACTIONS ON INDUSTRIAL ELECTRONICS, IEEE SERVICE CENTER, PISCATAWAY, NJ, USA, vol. 61, no. 3, 1 March 2014 (2014-03-01), pages 1147-1157, XP011524895, ISSN: 0278-0046, DOI: 10.1109/TIE.2013.2258307 [retrieved on 2013-08-23]
- Vol ET AL: "FacultyofElectricalEngineering UniversitiTeknologiMalaysia Harmonics Mitigation Using Active Power Filter: A Technological Review", , 1 January 2006 (2006-01-01), pages 17-26, XP055298315, Retrieved from the Internet: URL:http://citeseerx.ist.psu.edu/viewdoc/d ownload?doi=10.1.1.493.5324&rep=rep1&type= pdf [retrieved on 2019-04-02]

## Beschreibung

Die Erfindung betrifft einen Wechselrichter gemäß dem Oberbegriff des Patentanspruches 1.

Schaltverstärker für Anwendungen wie beispielsweise Power-Hardware-in-the-Loop-Testanlagen (P-HIL), Netzsimulatoren, etc. sollen eine geregelte Ausgangsspannung oder einen geregelten Ausgangsstrom mit möglichst hoher Bandbreite erzeugen, d.h., die Frequenz der geregelten Ausgangsgrößen soll sich bei voller Amplitude in einem Bereich von 0Hz (DC) bis zu einer möglichst hohen Frequenz bewegen können (Großsignalbandbreite), und mit einer kleineren Amplitude bis zu einer über der Großsignalbandbreite liegenden Frequenz (Kleinsignalbandbreite).

Ein Schaltverstärker besteht im Allgemeinen aus einer ersten Wechselrichterstufe, z.B. einer Vollbrückenschaltung, welche aus einer ersten Zwischenkreisspannung eine erste pulsbreitenmodulierte Rechteckwechselspannung erzeugt, wobei der auf eine Taktperiode bezogene lokale Mittelwert dieser ersten pulsbreitenmodulierten Rechteckwechselspannung ideal einem von einem Regler vorgegebenen Wert folgt. Die schaltfrequenten Anteile dieser ersten pulsbreitenmodulierten Rechteckwechselspannung müssen mittels eines Ausgangsfilters hinreichend stark unterdrückt werden, so dass die gewünschte harmonische Qualität der Ausgangsspannung bzw. des Ausgangsstromes erreicht wird.

Das Ausgangsfilter wird typischerweise als ein ein- oder mehrstufiges LC-Filter ausgelegt, wobei bei hoher Großsignalbandbreite insbesondere die maximalen Kapazitätswerte aufgrund der auftretenden Blindströme limitiert sind. Deshalb ist es von großer Relevanz, die Knickfrequenz bzw. obere Grenzfrequenz des Ausgangsfilters so hoch wie möglich wählen zu können. Gleichzeitig wird durch eine Erhöhung der Knickfrequenz des Ausgangsfilters auch der Frequenzbereich erweitert, in dem der Einfluss des Ausgangsfilters nur sehr klein ist, was prinzipiell für die Realisierung von hohen Bandbreiten interessant ist. Andererseits muss das Ausgangsfilter jedoch bei der Schaltfrequenz der ersten Konverterstufe und deren Harmonischen eine hinreichend hohe Filterdämpfung bereitstellen, um wie oben erwähnt die entsprechenden Spektralanteile der ersten pulsbreitenmodulierten Rechteckwechselspannung zu unterdrücken, d.h. die maximal zulässige Knickfrequenz des Ausgangsfilters muss hinreichend tiefer gewählt werden als die erste Schaltfrequenz der ersten Wechselrichterstufe. Umgekehrt bedingt daher eine hohe Knickfrequenz des Ausgangsfilters auch eine hohe Schaltfrequenz für die Ansteuerung der Leistungshalbleiter der ersten Wechselrichterstufe.

Die erste Zwischenkreisspannung der ersten Wechselrichterstufe muss hinreichend größer gewählt werden als die maximal zu erzeugende Ausgangsspannung. Die Leistungshalbleiter der ersten Wechselrichterstufe schalten diese erste Zwischenkreisspannung, wodurch aufgrund des mit zunehmender Sperrspannung schlechter werdenden Schaltverhaltens von Leistungshalbleitern und den damit auftretenden Schaltverlusten der maximal möglichen Schaltfrequenz der ersten Wechselrichterstufe Grenzen gesetzt sind. Dies wiederum limitiert wie oben beschrieben die maximal wählbare Knickfrequenz des Ausgangsfilters mit den erwähnten Nachteilen.

Es sind Konzepte von Wechselrichtern bekannt, bei welchen diese Wechselrichterstufe mehrere unterschiedliche Spannungspegel erzeugt. Nachteilig an diesen bekannten Konzepten ist jedoch, das die betreffenden Schaltungen äußerst aufwendig bzw. komplex sind. Zudem führen auch diese aufwendigen Schaltungskonzepte lediglich zu Ausgangssignalen, welche für viele Anwendungen zu hohe THD aufweisen.

Aus der US 2003/026111 A1 ist ein Wechselrichter bekannt, welcher eine erste und eine zweite Stufe aufweist, wobei die zweite Stufe keine separate Energieversorgung aufweist.

Die US 2015/062984 A1 und die US 2015/0270789 A1 beschreiben jeweils einen Wechselrichtermit mehreren parallel geschalteten Halbbrücken, welche jeweils an eine gekoppelte Spulenanordnung angeschlossen sind.

Das Paper: "Multiphase-Leg Coupling Current Balancer for parallel Operation of Multiple MW Power Modules" (Baoming et al.) offenbart einen Konverter mit geringen Abmessungen und geringem Gewicht.

Aufgabe der Erfindung ist es daher einen Wechselrichter der eingangs genannten Art anzugeben, mit welcher die genannten Nachteile vermieden werden können, und welcher eine hohe Bandbreite und einen einfachen Aufbau aufweist.

Erfindungsgemäß wird dies durch die Merkmale des Patentanspruches 1 erreicht. Alle technischen Merkmale des unabhängigen Anspruchs sind erforderlich und nicht optional, unabhängig von dem widersprechenden Aussagen in den folgenden Textpassagen.

Dadurch kann einfach ein Wechselrichter gebildet werden, welcher eine hohe Bandbreite aufweist. Der Wechselrichter weist eine effektiv sehr hohe Schaltfrequenz auf, weshalb ein Ausgangsfilter mit hoher Grenzfrequenz gewählt werden kann, wobei jedoch die tatsächlichen Schaltfrequenzen der einzelnen Halbleiterschalter deutlich unter dieser effektiven Schaltfrequenz liegen, was sich günstig auf die Halbleiterschalter auswirkt. Insbesondere wirkt sich dies vorteilhaft auf die erste Wechselrichterstufe aus, welche die hohe Gleichspannung nun nicht mehr mit hoher Frequenz schalten muss. Weiters besteht dabei keine Notwendigkeit zur Balancierung verschiedener Teilzwischenkreisspannungen.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten. In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Die Erfindung wird unter Bezugnahme auf die beigeschlossenen Zeichnungen, näher beschrieben. Dabei zeigt:
Fig. 1 eine erste Ausführung eines gegenständlichen Wechselrichters mit zwei weiteren Alternativen der zweiten Wechselrichterstufe;
Fig. 2 ein funktionales Blockschaltbild einer Steuer- und/oder Regeleinheit eines gegenständlichen Wechselrichters;
Fig. 3 einige Spannungsverläufe eines gegenständlichen Wechselrichters;
Fig. 4 eine zweite Ausführung eines gegenständlichen Wechselrichters; und
Fig. 5 Spektren eines herkömmlichen Wechselrichters sowie zweiter unterschiedlicher Betriebsweisen eines gegenständlichen Wechselrichters.

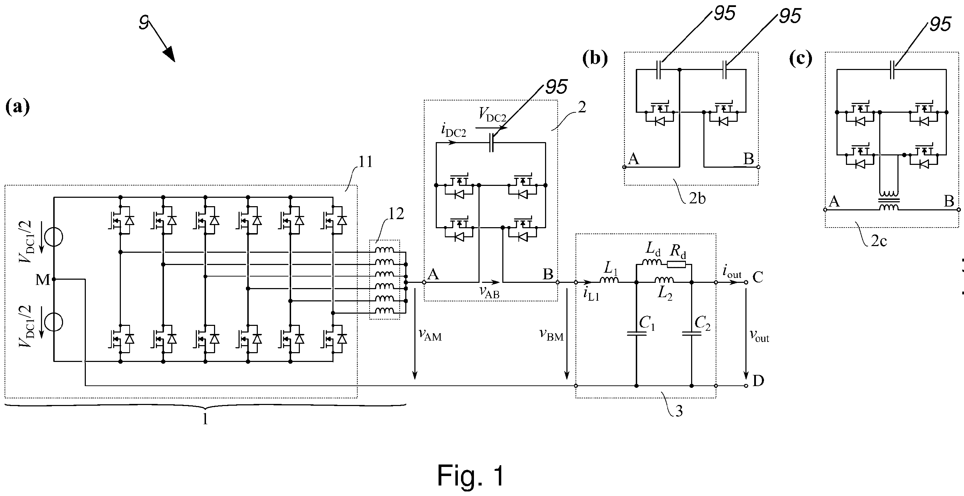

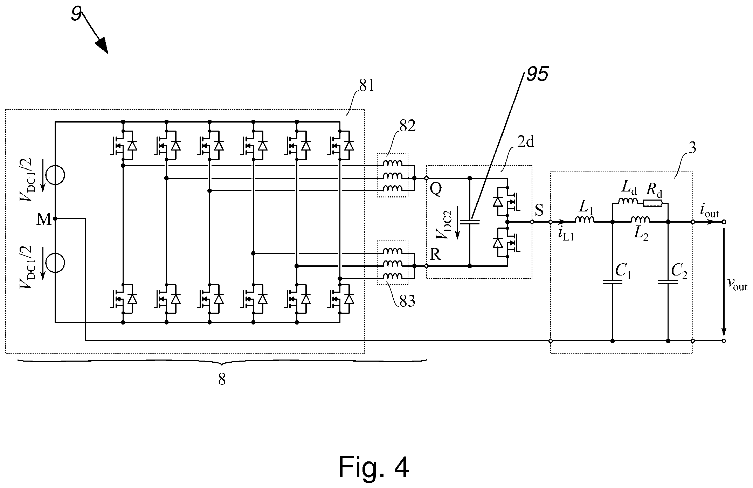

Die Fig. 1 und 4 zeigen Ausführungen eines Wechselrichters 9 mit einer ersten Wechselrichterstufe 1, 8 mit einer ersten Schaltfrequenz und einer der ersten Wechselrichterstufe 1, 8 nachgeschalteten zweiten Wechselrichterstufe 2 mit einer zweiten Schaltfrequenz, wobei die erste Wechselrichterstufe 1, 8 eine erste Zwischenspannung aufweist und zum Erzeugen einer ersten pulsweitenmodulierten Wechselspannung mit wenigstens drei unterschiedlichen Spannungspegeln ausgebildet ist, wobei sich die unterschiedlichen Spannungspegel jeweils durch wenigstens eine erste Differenzspannung unterscheiden, wobei die zweite Wechselrichterstufe 2 eine zweite Zwischenspannung aufweist, welche zweite Zwischenspannung kleiner der ersten Zwischenspannung und größer der ersten Differenzspannung ist, und wobei die zweite Schaltfrequenz größer der ersten Schaltfrequenz ist.

Dadurch kann einfach ein Wechselrichter 9 gebildet werden, welcher eine hohe Bandbreite aufweist. Der Wechselrichter 9 weist eine effektiv sehr hohe Schaltfrequenz auf, weshalb ein Ausgangsfilter 3 mit hoher Grenzfrequenz gewählt werden kann, wobei jedoch die tatsächlichen Schaltfrequenzen der einzelnen Halbleiterschalter deutlich unter dieser effektiven Schaltfrequenz liegen, was sich günstig auf die Halbleiterschalter auswirkt. Insbesondere wirkt sich dies vorteilhaft auf die erste Wechselrichterstufe 1, 8 aus, welche die hohe Gleichspannung nun nicht mehr mit hoher Frequenz schalten muss. Weiters besteht dabei keine Notwendigkeit zur Balancierung verschiedener Teilzwischenkreisspannungen.

Fig. 1 zeigt einen Wechselrichter 9, welcher auch als sog. hybride Wechselrichterschaltung bezeichnet werden kann, zur Übertragung elektrischer Energie zwischen einem Gleichspannungssystem und einem Gleich- oder Wechselspannungssystem, aufweisend eine erste Wechselrichterstufe 1, welche einen ersten Zwischenkreis mit einer der Eingangsgleichspannung entsprechenden ersten Zwischenkreisspannung, mehrere, gegenständlich sechs, parallel geschaltete und phasenversetzt mit einer ersten Schaltfrequenz pulsbreitenmoduliert angesteuerte Brückenzweige bzw. Brücken-Halbleiterschaltungen 11 sowie eine gekoppelte Spulenanordnung 12 aufweist.

Die erste Wechselrichterstufe 1, 8 weist mindestens eine Anschlussschaltung auf, wobei eine Anschlussschaltung jeweils eine Ausgangsklemme, eine gekoppelte Spulenanordnung 12, 82, 83 und eine Gruppe von mindestens zwei phasenversetzt mit der ersten Schaltfrequenz pulsbreitenmoduliert angesteuerten Brückenzweigen aufweist, wobei jeder der Brückenzweige einen Mittenanschluss aufweist und die Mittenanschlüsse dieser Brückenzweige über die gekoppelte Spulenanordnung 12, 82, 83 an die Ausgangsklemme angeschlossen sind, und diese Ausgangsklemme eine Ausgangsklemme der ersten Wechselrichterstufe 1, 8 zum Erzeugen der ersten pulsbreitenmodulierten Wechselspannung bildet.

Eine solche Ausgangsklemme ist also eine Klemme, bezüglich welcher die erste pulsbreitenmodulierte Wechselspannung definiert ist. Die erste Wechselrichterstufe 1,8 kann als "parallel interleaved multilevel inverter" bezeichnet werden.

Die erste Wechselrichterstufe 1 kann einphasig ausgebildet sein, wie in der Figur 1. Es sind aber auch mehrphasige Anordnungen möglich, in denen der in Figur 1 gezeigte Wechselrichter 9 jeweils für jede Phase einmal wiederholt vorliegt. Diese mehreren Wechselrichter können in Stern- oder Dreieckanordnung miteinander verbunden sein.

Die Spulenanordnung kann dazu eingerichtet sein, Gleichtaktströme, die von den Mittenanschlüssen einer Gruppe von Brückenzweigen zur entsprechenden Ausgangsklemme fließen, zu glätten. Damit kann die Spulenanordnung mindestens einen Teil einer Serieninduktivität L₁ des Ausgangsfilters realisieren.

Die Spulenanordnung kann auch dazu eingerichtet sein, Gegentaktströme, die von den Mittenanschlüssen einer Gruppe von Brückenzweigen zum entsprechenden Ausgangsklemme fließen, zu unterdrücken.

Die erste Wechselrichterstufe 1, 8 kann umfassend Neutral-Point-Clamped-Brückenzweigen ausgebildet sein. Sie kann umfassend Flying-Capacitor-Brückenzweigen ausgebildet sein.

Weiters weist der Wechselrichter 9 mindestens eine zweite Wechselrichterstufe 2 auf, welche einen zweiten Zwischenkreis mit einer, gegenüber der ersten Zwischenkreisspannung, tieferen zweiten Zwischenkreisspannung aufweist. Die zweite Wechselrichterstufe 2 weist bevorzugt keine externe Speisung auf. Deren mit einer zweiten Schaltfrequenz pulsbreitenmodulierte Ausgangswechselspannung ist in Serie zur ersten pulsbreitenmodulierten Ausgangswechselspannung der ersten Wechselrichterstufe geschaltet.

Fig. 1 zeigt dabei neben der Darstellung eines vollständigen Wechselrichters 9, unter der Bezeichnung (a) weiters zwei alternative Ausgestaltungen einer zweiten Wechselrichterstufe unter den Bezeichnungen (b) und (c).

Zur Vermeidung zusätzlicher Schalthandlungen und einer damit verbundenen ungünstigen Erzeugung niederfrequenter Harmonischer in der pulsbreitenmodulierten Ausgangswechselspannung der zweiten Wechselrichterstufe 2, welche sich auch in der Ausgangsspannung v_{OUT} wiederfinden würden, ist es insbesondere vorteilhaft, der Pulsbreitenmodulation der zweiten Wechselrichterstufe 2 Trägersignale in Sägezahnform zugrunde zu legen. Alternativ, wenngleich weniger vorteilhaft können auch Trägersignale in Dreieckform verwendet werden.

Der gegenständliche Wechselrichter weist weiters ein Ausgangsfilter 3 auf, welches bevorzugt bzw. wie in den Fig. 1 und 4 dargestellt, als zweistufiges, passives LC-Filter ausgebildet ist. Das Ausgangsfilter 3 ist schaltungstechnisch nachfolgend der zweiten Wechselrichterstufe angeordnet. Das Ausgangsfilter 3 weist u.a. eine Serieninduktivität L₁ auf, welche bevorzugt zumindest teilweise durch die Streuinduktivität der gekoppelten Spulenanordnung 12 gebildet sein kann. Die in Fig. 1 gezeigte Implementierung des Ausgangsfilters 3 zeigt nur eine mögliche Ausführung eines geeigneten Ausgangsfilters 3, wobei selbstverständlich auch andere Ausführungen eines Filters, sowohl aktiv als auch passiv, vorgesehen sein können.

Bevorzugt ist es nicht zwingend notwendig, die Ausgangswechselspannung v_{OUT} auf den Mittelpunkt des ersten Zwischenkreises zu beziehen und dementsprechend auch die Filterkondensatoren an diesen Punkt anzuschließen. Es kann etwa auch die negative Versorgungsspannung des Zwischenkreises der ersten Wechselrichterstufe 1 verwendet werden, oder im Falle einer mehrphasigen Ausführung des Gesamtsystems auch ein Sternpunkt, wodurch vorteilhaft eine Symmetrierung von zwei Teilspannungen im Zwischenkreis der ersten Wechselrichterstufe vermieden werden kann.

Soll ein mehrphasiges Spannungssystem am Ausgang erzeugt werden, können eine entsprechende Anzahl der gegenständlichen Wechselrichter 9 eingesetzt werden, wobei insbesondere im Fall eines dreiphasigen Ausgangs auch ein vierter gegenständlicher Wechselrichter 9 zur aktiven Erzeugung eines Sternpunktpotentials eingesetzt werden kann.

Alternativ zur Ausführung der zweiten Wechselrichterstufe 2 gemäß Fig. 1a, kann diese entsprechend Fig. 1b auch mit einer Halbbrückenkonfiguration realisiert werden, entsprechend Schaltung 2b. Weiters kann die von der zweiten Wechselrichterstufe 2 erzeugte pulsbreitenmodulierte Wechselspannung gemäß Fig. 1c über einen Transformator eingekoppelt werden, entsprechend Schaltung 2c.

Die erste Wechselrichterstufe 1 kann weiters mit Brückenzweigen 11, die mehrere Spannungslevels bzw. Spannungspegel erzeugen können (z.B. NPC-Struktur), realisiert werden.

Auch derart ausgebildete Brückenzweige werden phasenversetzt und in Verbindung mit der Spulenanordnung 12, 82, 83 betrieben.

Außerdem können auch die Brückenzweige der zweiten Wechselrichterstufe 2a, 2b, 2c jeweils durch mehrere phasenversetzt getaktete Brückenzweige und einer zweiten gekoppelten Spule zur Superposition der Ausgangsspannungen der einzelnen Brückenzweige realisiert werden, was jedoch in den Figuren nicht dargestellt ist.

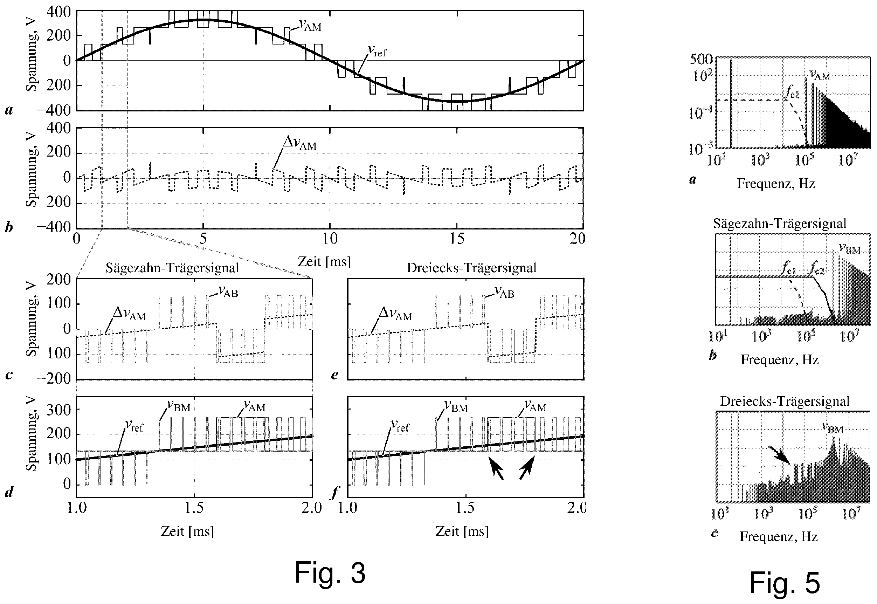

Anhand der ersten Ausführung gemäß Fig. 1 und der dazugehörigen Spannungsverläufe gemäß Fig. 3 wird im Folgenden der gegenständliche Wechselrichter 9 im Detail beschrieben.

Die erste Wechselrichterstufe 1 verwendet mehrere parallel geschaltete Brückenzweige 11, welche auch als Brücken-Halbleiterschaltungen 11 bezeichnet werden, und welche mit der ersten Zwischenkreisspannung arbeiten. Die verwendeten Halbleiterschalter bzw. Leistungshalbleiter müssen eine entsprechend hohe Sperrspannung aufweisen. Die Brückenzweige werden phasenversetzt mit einer ersten Schaltfrequenz getaktet angesteuert und die Ausgangsspannungen der einzelnen Brückenzweige werden mittels einer gekoppelten Spulenanordnung 12 superponiert, wodurch eine erste mehrstufige pulsbreitenmodulierte Wechselspannung v_{AM} mit einer ersten effektiven Schaltfrequenz, die ein Vielfaches der ersten Schaltfrequenz ist, erzeugt wird.

Die einzelnen Brücken-Halbleiterschaltungen 11 der ersten Wechselrichterstufen 1 werden dabei derart überlagert geschaltet, dass zu wenigstens einem vorgebbaren Zeitpunkt wenigstens zwei der Brücken-Halbleiterschaltungen 11 gleichzeitig eingeschaltet sind, zur Erzeugung der unterschiedlichen Spannungspegel.

Wie in Fig. 3 dargestellt, approximiert diese erste mehrstufige Wechselspannung die ideal zu erzeugende Wechselspannung v_{ref}. Diese wird beispielsweise von einem übergeordneten Regelsystem derart vorgegeben, dass nach der Serieninduktivität L₁ und dem Ausgangsfilter 3 eine gewünschte Ausgangsspannung auftritt. Die momentane Differenz Δv_{AM} zwischen v_{AM} und v_{ref} enthält spektrale Komponenten bei der ersten effektiven Schaltfrequenz und darüber, was wiederum eine Obergrenze für die Knickfrequenz bzw. obere Grenzfrequenz des Ausgangsfilters 3 bestimmt. Die erste effektive Schaltfrequenz ist als Vielfaches der ersten Schaltfrequenz wie eingangs beschrieben durch die Schaltverluste der Halbleiterschalter der ersten Wechselrichterstufe 1 limitiert.

Bevorzugt wird die zweite Zwischenkreisspannung der zweiten Wechselrichterstufe 2 derart gewählt, dass sie mindestens der Spannungsdifferenz zwischen zwei Stufen der ersten mehrstufigen pulsbreitenmodulierten Wechselspannung v_{AM} der ersten Wechselrichterstufe entspricht, d.h. nur einem Bruchteil der ersten Zwischenkreisspannung. Dadurch können in den Brückenzweigen der zweiten Wechselrichterstufe 2 Halbleiterschalter mit einer tieferen bzw. geringeren Sperrspannung als die Halbleiterschaltelemente der ersten Wechselrichterstufe 1 eingesetzt werden. Die geringere Sperrspannung führt dabei zu geringeren Schaltverlustenergien, wodurch diese Halbleiterschaltelemente der zweiten Wechselrichterstufe 2 mit einer höheren zweiten Schaltfrequenz angesteuert werden können.

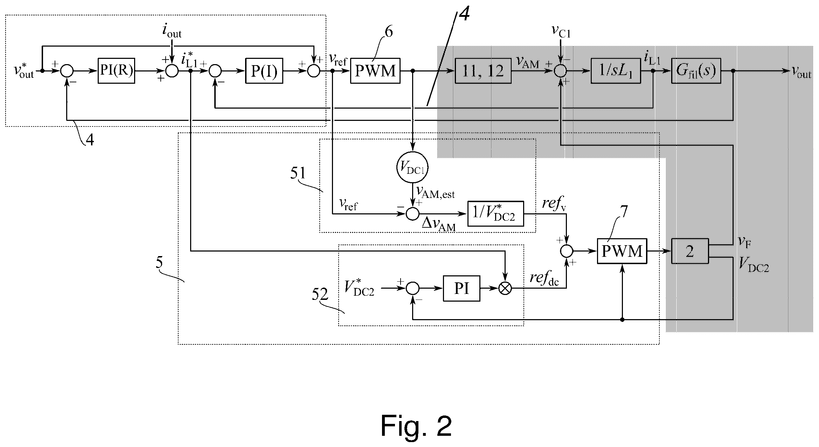

Zur weiteren Verbesserung der Approximation, mit welcher die erste und die zweite Wechselrichterstufe 1, 2 zusammen die ideal einzustellende bzw. vorgegebene bzw. vorgebbare Wechselspannung v_{ref} nachbilden, wird vorteilhaft die momentane bzw. jeweilige Differenz Δv_{AM} zwischen v_{AM} und v_{ref} für die Bildung der Referenz der auf sägezahnförmigen Trägersignalen basierenden Pulsbreitenmodulation der zweiten Wechselrichterstufe 2 verwendet, wie dies in Fig. 2 gezeigt ist. Die konkrete regelungstechnische Implementierung wird zu Fig. 2 erläutert.

Die zweite Wechselrichterstufe 2 erzeugt also eine mit der, gegenüber der ersten Schaltfrequenz, hohen zweiten Schaltfrequenz pulsbreitenmodulierte zweite Ausgangswechselspannung v_{AB} die im lokalen Mittel der Differenzspannung Δv_{AM} zwischen v_{AM} und v_{ref} entspricht. Durch die Serienschaltung der Ausgangswechselspannungen der ersten Wechselrichterstufe 1 und der zweiten Wechselrichterstufe 2 entsteht so eine dritte mehrstufige pulsbreitenmodulierte Wechselspannung v_{BM} = v_{AM} + v_{AB}, welche nun eine dritte, höhere effektive Schaltfrequenz aufweist, die der effektiven Schaltfrequenz der zweiten Wechselrichterstufe 2 entspricht.

Dies erlaubt die Wahl einer entsprechend hohen Knickfrequenz des Ausgangsfilters 3, was die oben erwähnten Vorteile mit sich bringt. Neben der Ermöglichung einer großen Bandbreite der Ausgangsgrößen ist die damit verbundene, durch die aktive Filterung erreichbare Reduktion der Baugröße der Komponenten (Kondensatoren und Spulen) des Ausgangsfilters 3 als weiterer Vorteil zu sehen. Dadurch ist ein gegenständlicher Wechselrichter 1 auch für Anwendungen, die keine große Bandbreite der Ausgangsgrößen erfordern (z.B. Stromversorgungsgeräte), vorteilhaft, weil dadurch der Aufwand an passiven Komponenten reduziert wird und eine Erhöhung der Leistungsdichte erzielt werden kann.

Der gegenständliche Wechselrichter 1 weist eine - nicht dargestellte - Steuer- und/oder Regeleinheit auf. Fig. 2 zeigt eine Regelstruktur für die hybride Wechselrichterschaltung, welche bevorzugt in der Steuer- und/oder Regeleinheit implementiert ist. Die Steuer- und/oder Regeleinheit kann auch durch mehrere separate Komponenten gebildet sein, und muss folglich nicht nur eine einzige abgeschlossene Baueinheit sein.

Die Regelstruktur besteht bevorzugt aus einer kaskadierten Regelung der Ausgangsspannung v_{Out} zwischen den Klemmen C und D, basierend auf einer unterlagerten Regelung des Stromes i_{L1} in der ersten Filterinduktivität L₁, mit Vorsteuerung des Ausgangsspannungssollwertes v_{Out*} sowie Störgrößenaufschaltung des Ausgangsstromes i_{Out}.

Die von den beiden Regelschleifen 4 ausgeführte Funktion kann unterschiedlich ausgeführt werden, wobei Fig. 2 eine bevorzugte Ausbildung zeigt. Diese Regelung der Ausgangsspannung erzeugt ein Ausgangssignal, welches einer durch den Leistungsteil des Wechselrichters 9 ideal einzustellenden und an die Eingangsklemmen des Ausgangsfilters 3 anzulegenden Referenzspannung v_{ref} entspricht. Aus dieser Spannung werden dann mittels Pulsbreitenmodulation, Block 6, die Ansteuersignale für die Brückenzweige der ersten Wechselrichterstufe 1 erzeugt.

In Block 5 werden die Ansteuersignale für die Brückenzweige der zweiten Wechselrichterstufe gebildet bzw. erzeugt. Dabei muss erstens, wie vorstehend beschrieben, die Ausgangsspannung v_{AB} der zweiten Wechselrichterstufe 2 derart sein, dass sie im lokalen zeitlichen Mittel der Abweichung zwischen der von der Ausgangsspannungsregelung, Block 4, vorgegebenen, und an das Ausgangsfilter anzulegenden Spannung v_{ref} und der von der ersten Wechselrichterstufe 1 tatsächlich erzeugten Spannung v_{AM} entspricht. Zudem soll zweitens sichergestellt werden, dass der Zwischenkreiskondensator 95 der zweiten Wechselrichterstufe 2 beim Start des Wechselrichters 1 auf eine definierte Spannung geladen wird und dass diese Spannung während des Betriebes des Wechselrichters 1 im zeitlichen Mittel konstant gehalten werden kann, da beispielsweise die in den Leistungshalbleitern bzw. Halbleiterschaltern der zweiten Wechselrichterstufe 2 auftretenden Verluste aus dem Zwischenkreis der zweiten Wechselrichterstufe 2 gedeckt werden und damit den Zwischenkreiskondensator 95 entladen würden, sollten keine entsprechenden Vorkehrungen getroffen werden.

Die erste Zielsetzung kann durch eine Signalverarbeitung, wie sie in Fig. 2 im Block 51 gezeigt ist, realisiert werden. Dabei wird die Differenz Δv_{AM} zwischen der ideal an das Ausgangsfilter 3 anzulegenden Spannung und der von der ersten Wechselrichterstufe 1 tatsächlich erzeugten Spannung berechnet. Dies kann zum einen mittels der Steuersignale der ersten Pulsbreitenmodulation, Block 6, und der ersten Zwischenkreisspannung V_{DC1} erfolgen, wie in Fig. 2 gezeigt. Die erste Zwischenkreisspannung V_{DC1} wird dabei bevorzugt durch Messen ermittelt.

Alternativ hiezu kann die tatsächlich von der ersten Wechselrichterstufe 1 erzeugte Spannung v_{AM} auch gemessen und dieser Messwert für die Berechnung der Differenzspannung Δv_{AM} herangezogen werden. Dies erfordert eine Spannungsmessung mit ausreichend hoher Dynamik

Durch Normierung bzw. Normalisieren der Differenzspannung Δv_{AM} mit dem Sollwert der zweiten Zwischenkreisspannung V_{DC2*} der zweiten Wechselrichterstufe 2 kann ein erstes Referenzsignal refᵥ für die Pulsbreitenmodulation, Block 7, der zweiten Wechselrichterstufe 2 erzeugt werden.

Die weitere bzw. zweite Zielsetzung, die Stabilisierung der zweiten Zwischenkreisspannung V_{DC2} der zweiten Wechselrichterstufe 2, kann durch die in Fig. 2 im Block 52 gezeigte bevorzugte Regelstruktur erreicht werden. Ein PI-Regler erzeugt aus der Abweichung der gemessenen Zwischenkreisspannung V_{DC2} der zweiten Wechselrichterstufe 2 von ihrem Sollwert V_{DC2*} eine Größe, die einer in den Zwischenkreiskondensator 95 einzuspeisenden oder daraus abzuführenden Leistung entspricht. Um einen solchen Leistungsfluss einzustellen, muss die Ausgangsspannung v_{AB} der zweiten Wechselrichterstufe 2 einen Anteil enthalten derart, dass zusammen mit dem Laststrom i_{L1} ein einem positiven oder negativen ohmschen Widerstand entsprechendes Verhalten auftritt. Gemäß einer besonders einfachen Variante wird zur Erzeugung eines zweiten Referenzsignals ref_{dc} für die Pulsbreitenmodulation, Block 7, der zweiten Wechselrichterstufe 2 die Ausgangsgröße des Zwischenkreisspannungsreglers mit dem Sollwert des Ausgangsstromes i_{L1*} multipliziert.

Alternativ dazu kann auch der gemessene Strom i_{L1} verwendet werden. Des Weiteren können aufwendigere Techniken wie beispielsweise eine Normalisierung von i_{L1*} bzw. i_{L1} auf dessen Spitzenwert (im Falle eines periodischen Signals) oder auch eine PLL eingesetzt werden, um das oben beschrieben leistungsbildende Verhalten, d.h. eine Ausgangsspannungskomponente der zweiten Wechselrichterstufe proportional zum Laststrom i_{L1} zu erreichen.

Die beiden Referenzsignale refᵥ und ref_{dc} werden anschließend addiert um das Referenzsignal für die Pulsbreitenmodulation, Block 7, der zweiten Wechselrichterstufe zu berechnen. Diese Pulsbreitenmodulation, Block 7, der zweiten Wechselrichterstufe kann, wie in Fig. 2 gezeigt, zusätzlich die gemessene zweite Zwischenkreisspannung V_{DC2} der zweiten Wechselrichterstufe 2 verwenden, um allfällige Schwankungen derselben ausgleichen zu können, was vorteilhaft die Realisierung des Zwischenkreises der zweiten Wechselrichterschaltung 2 mittels eines vergleichsweise kleinen Kondensators begünstigt.

Insbesondere hat es sich als vorteilhaft erwiesen, dass bei der Pulsbreitenmodulation, Block 7, der zweiten Wechselrichterstufe 2 Trägersignale in Sägezahnform (asymmetrisches Dreieck bei dem eine der beiden Flanken ideal senkrecht verläuft) verwendet werden, und nicht solche in, insbesondere symmetrischer, Dreiecksform. Da sägezahnförmige Trägersignale immer die gleiche Steigung aufweisen, können sprunghafte Änderungen des Referenzsignals nicht zu mehrfachen, teils unerwünschten Schalthandlungen innerhalb einer effektiven Taktperiode führen. Solche mehrfachen Schalthandlungen können niederfrequente Harmonische in der Ausgangsspannung erzeugen, wodurch die Möglichkeit zur Erhöhung der Knickfrequenz des Ausgangsfilters 3 beeinträchtigt würde. Fig. 5 zeigt mehrere Spektren, wobei in Fig. 5a das Spektrum eines einstufigen Wechselrichters zeigt. Fig. 5c zeigt das Spektrum eines gegenständlichen Wechselrichters, jedoch im Betrieb mit einem dreiecksförmigen Trägersignal der zweiten Wechselrichterstufe. Fig. 5b zeigt das Spektrum des gegenständlichen Wechselrichters mit dem bevorzugten sägezahnförmigen Trägersignal der zweiten Wechselrichterstufe. Deutlich zuerkennen sind die gegenüber Fig. 5a deutlich höherfrequenten Klirranteile, sowie die deutliche Erhöhung des niederfrequenten Klirrs (THD) bei Fig. 5c.

Durch die gegenständliche, bevorzugte Regelung wird eine weitgehende Unabhängigkeit zwischen den Steuerungen der beiden Wechselrichterstufen 1, 2 erreicht. Die Steuersignale für die beiden Wechselrichterstufen 1,2 müssen nicht durch eine gemeinsame, verkoppelte Logik erzeugt werden. Die Wahl der zweiten Schaltfrequenz der zweiten Wechselrichterstufe 2 unterliegt zudem keinerlei Beschränkungen, und muss insbesondere nicht zwingend ein ganzzahliges Vielfaches der ersten Schaltfrequenz der ersten Wechselrichterstufe 1 sein. Der Informationsaustausch zwischen den Steuereinrichtungen der beiden Wechselrichterstufen 1,2 ist wie in Fig. 2 zu sehen auf die Übermittlung des aktuellen Schaltzustandes der ersten Wechselrichterstufe 1 an die Steuerung der zweiten Wechselrichterstufe 2 beschränkt. Alternativ dazu kann, wie bereits dargelegt, auch eine hochdynamische Messung der Ausgangswechselspannung der ersten Wechselrichterstufe 1 erfolgen, wodurch eine vollständige Trennung der Steuerungen der beiden Wechselrichterstufen 1, 2 erreicht werden kann. Eine solche weitgehende oder vollständige Trennung der Steuerung der beiden Wechselrichterstufen 1, 2 erlaubt vorteilhaft eine vergleichsweise einfache Erweiterung einer bereits bestehenden ersten Wechselrichterstufe 1 um eine zweite, schneller getaktete zweite Wechselrichterstufe 2. Dadurch können die gegenständlichen Vorteile auch bei bereits bestehenden Wechselrichterschaltung, durch entsprechende Erweiterung derselben, erzielt werden. Dies ist auch als Retrofitting bekannt.

Müssen aus implementierungstechnischen Gründen trotzdem dreieckförmige Trägersignale verwendet werden, kann die Erzeugung von niederfrequenten Harmonischen, Fig. 5c, bei der Pulsbreitenmodulation, Block 7, der zweiten Konverterstufe bzw. Wechselrichterstufe 2 durch eine Quantisierung der PWM-Referenz für die Pulsbreitenmodulation, Block 6, der ersten Konverterstufe 1 zumindest reduziert werden, wobei mögliche Schalthandlungen der ersten Wechselrichterstufe 1 immer mit dem Anfang einer, insbesondere effektiven, Schaltperiode der zweiten Wechselrichterstufe 2 zusammenfallen. Eine weitere Reduktion kann erreicht werden, indem die derart quantisierte Referenz für die Pulsbreitenmodulation, Block 6, der ersten Wechselrichterstufe 1 zusätzlich noch mit der effektiven zweiten Schaltfrequenz der zweiten Konverterstufe 2 abgetastet wird.

Es ist zu beachten, dass die oben beschriebenen vorteilhaften Eigenschaften, die bei Verwendung sägezahnförmiger Trägersignale für die Pulsbreitenmodulation der zweiten Wechselrichterstufe 2 auftreten, auch in Kombination mit einer anderen als der beschriebenen Realisierung der ersten Wechselrichterstufe 1 erzielt werden können. Diese Umsetzung ist also unabhängig von der konkreten Realisierung der ersten Wechselrichterstufe als vorteilhaft zu betrachten.

Die vorstehend beschriebene Regelung der zweiten Zwischenkreisspannung ist an sich auch dazu in der Lage, diese zweite Zwischenkreisspannung während der Startphase des Wechselrichters 1 ausgehend von 0V auf den Sollwert V_{DC2*} zu erhöhen. Ist am Ausgang keine Last angeschlossen, kann dies jedoch lange dauern, da der Strom i_{L1} in diesem Fall sehr klein werden kann. Um dies zu vermeiden ist bevorzugt eine Serieschaltung eines Widerstandes und eines Schalters vorgesehen, welche parallel zum Ausgangskondensator C₂ zwischen den Klemmen C und D angeschlossen werden, oder alternativ parallel zum ersten Filterkondensator C₁. Beim Start des Wechselrichters 1 ohne oder mit nur kleiner Last am Ausgang kann durch zeitweiliges Schließen dieses Schalters ein zusätzlicher Laststrom im Widerstand aufgebaut werden, der dann als Anteil des Stromes i_{L1} eine schnelle Aufladung des Zwischenkreiskondensators 95 der zweiten Wechselrichterschaltung 2 auf dessen Sollwert gemäß obiger Beschreibung ermöglicht.

Alternativ kann auch eine dedizierte galvanisch getrennte Ladeschaltung, beispielsweise in Form eines isolierten DC-DC-Konverters zur Aufladung des Zwischenkreiskondensators 95 der zweiten Wechselrichterstufe 2 vorgesehen sein, wobei dieser isolierte DC-DC-Konverter vorteilhaft nur eine gegenüber der Leistung des Wechselrichters 1 und auch gegenüber der Nominalleistung der zweiten Wechselrichterstufe 2 sehr kleine Nennleistung aufweisen muss. Es ist dann bei entsprechender Dimensionierung dieser Auflade- bzw. Nachladeschaltung auch möglich, die in der zweiten Wechselrichterstufe 2 auftretenden Verluste im laufenden Betrieb zu decken und damit die Zwischenkreisspannung der zweiten Wechselrichterschaltung 2 auf einen bestimmten Sollwert zu regeln, wodurch durch Elimination des Blocks 52 in Fig. 2 die Ansteuersignale für die Halbleiterschalter der zweiten Wechselrichterstufe 2 vorteilhaft einfacher erzeugt und gesteuert werden können.

Bei einer weiteren Ausführung eines gegenständlichen Wechselrichters 1 wird die Ausgangsspannung der zweiten Wechselrichterstufe 2 nicht direkt elektrisch in Serie zur Ausgangsspannung der ersten Wechselrichterstufe 1 geschaltet, sondern über einen Transformator eingekoppelt, wie in Fig. 1c gezeigt. Dabei ist eine erste Transformatorwicklung, die magnetisch mit einer zweiten Transformatorwicklung gekoppelt ist, zwischen den Ausgangsklemmen der zweiten Wechselrichterstufe 2 angeschlossen, während die zweite Transformatorwicklung zwischen den Klemmen A und B gemäß Fig. 1c angeschlossen wird. Durch die galvanische Trennung wird vorteilhaft die Realisierung der Ansteuerung der Halbleiterschalter der zweiten Brückenschaltung der zweiten Wechselrichterstufe 2 vereinfacht, da mindestens zwei dieser Halbleiterschalter potentialfrei angesteuert werden können. Aufgrund des frei wählbaren Ubersetzungsverhältnisses des Transformators ist die Wahl der Zwischenkreisspannung der zweiten Wechselrichterstufe 2 weniger Einschränkungen unterworfen, insbesondere kann sie kleiner gewählt werden als die Differenz zwischen den Spannungslevels der pulsbreitenmodulierten Ausgangsspannung der ersten Wechselrichterstufe 1 v_{AM} sofern das Transformatorübersetzungsverhältnis geeignet gewählt wird. Außerdem wird so eine potentialfreie aktive Versorgung des Zwischenkreises der zweiten Wechselrichterstufe 2 möglich, wodurch die zweite Wechselrichterstufe 2 auch zur Einspeisung von Wirkleistung, d.h. zur Übernahme eines Teils des Gesamtenergieflusses zwischen dem Gleichspannungs- und dem Wechselspannungssystem, verwendet werden kann. Dies ist an sich auch ohne besagte galvanische Trennung möglich, würde dann aber eine entsprechend dimensionierte potentialgetrennte Versorgung des Zwischenkreises der zweiten Wechselrichterstufe 2 erfordern. Insbesondere müsste eine solche potentialgetrennte Versorgungsschaltung eine deutlich höhere Nennleistung aufweisen, als zum Laden des Zwischenkreiskondensators 95 der zweiten Wechselrichterstufe 2 oder auch zur Deckung der im Betrieb auftretenden Verluste der zweiten Wechselrichterstufe 2 notwendig wären.

Bei weiteren Ausführungen der vorliegenden Erfindung kann die zweite Wechselrichterstufe 2 als Serie- und/oder Parallelschaltung von mehreren Wechselrichterstufen realisiert sein, wobei die jeweiligen Zwischenkreisspannungen geeignet zu wählen sind. Dadurch kann durch phasenversetzte Taktung der Brückenzweige der einzelnen Wechselrichterstufen die zweite effektive Schaltfrequenz einer derartigen zweiten mehrstufigen Wechselspannung v_{BM} weiter erhöht werden.

Es sei ferner darauf hingewiesen, dass der Fall der Erzeugung einer Wechselspannung am Ausgang auch den Fall einer Ausgangsfrequenz von 0Hz, also der Erzeugung einer Ausgangsgleichspannung, umfasst. Der gegenständliche Wechselrichter 1 und die zugehörige Betriebsweise sowie deren Variationen sind auch zur Erzeugung einer Gleichspannung am Ausgang geeignet. Insbesondere kann beim Betrieb als Gleichspannungsquelle die zweite Wechselrichterstufe 2 durch geeignete Ansteuerung zur Emulation einer gewünschten Ausgangsimpedanz herangezogen werden, während die erste Wechselrichterstufe 1 eine konstante Gleichspannung erzeugt.

Zum Schutz der zweiten Wechselrichterstufe 2 im Falle eines unzulässigen Ansteigens oder Absinkens der Zwischenkreisspannung der zweiten Wechselrichterstufe 2 können bei Realisierungen der zweiten Wechselrichterstufe 2, die auf einer Vollbrückenschaltung basieren, entweder die beiden oberen oder die beiden unteren Halbleiterschalter eingeschaltet werden, um einen Freilaufpfad für den Laststrom zu schaffen. Alternativ dazu kann zwischen den Ausgangsklemmen A und B der zweiten Wechselrichterstufe 2 ein bidirektional leitfähiger Überbrückungsschalter vorgesehen werden, beispielsweise eine Anordnung von zwei anti-parallel verschalteter Thyristoren. Ein solcher Überbrückungsschalter kann vorteilhaft insbesondere auch zum Schutz einer auf einer Halbbrückenschaltung basierenden Realisierung der zweiten Wechselrichterstufe 2 eingesetzt werden, bei welcher es nicht möglich ist, mit den Leistungshalbleitern der zweiten Wechselrichterstufe 2 einen Freilaufpfad zu schaffen.

Um ferner im Falle hochdynamischer Änderungen des Laststromes das Auftreten von unzulässig hohen Spannungen an der Klemme B in Fig. 1 zu verhindern, können vorteilhaft zwei Klemmdioden eingesetzt werden, um einen niederinduktiven Pfad für solche Überstrompulse zu schaffen, wobei die erste Klemmdiode mit ihrer Anode am Punkt B und mit ihrer Kathode an der positiven Zwischenkreisschiene der ersten Wechselrichterstufe 1 angeschlossen ist, und die zweite Klemmdiode mit ihrer Anode an der negativen Zwischenkreisschiene der ersten Wechselrichterstufe 1 und mit ihrer Kathode am Punkt B.

Fig. 4 zeigt eine weitere, leicht unterschiedliche Ausführung des gegenständlichen Wechselrichters 1. Dabei werden die Brückenzweige der ersten Wechselrichterstufe 81 in zwei Gruppen zusammengefasst, wobei die von den Brückenzweigen einer Gruppe erzeugten Ausgangsspannungen jeweils mittels einer gekoppelten Spulenanordnung 82 und 83 zu einer mehrstufigen pulsbreitenmodulierten Wechselspannung superponiert werden. Diese von den beiden Gruppen von Brückenzweigen mit jeweils zugehöriger gekoppelter Spule erzeugten Wechselspannungen werden an den Punkten Q und R an den Gleichspannungszwischenkreis der zweiten Wechselrichterstufe 2d, umfassend einen Zwischenkreiskondensator und eine Halbbrücke, angeschlossen. Die Punkte Q und R können als erste und zweite Eingangsklemme der zweiten Wechselrichterstufe 2 betrachtet werden, wobei diese dazu eingerichtet ist, eine Spannung an einer Ausgangsklemme S auf einen Wert zwischen den Spannungen an ihren Eingangsklemmen Q, R einzustellen. Analog zur oben ausführlich beschriebenen Funktion des Wechselrichters 1 gemäß Fig. 1 kann auch hier durch eine entsprechende Ansteuerung der Halbleiterschalter der zweiten Wechselrichterstufe 2d sowohl die zweite effektive Schaltfrequenz der an das Ausgangsfilter 3 angelegten zweiten mehrstufigen pulsbreitenmodulierten Wechselspannung erhöht werden und gleichzeitig die mittlere Spannung des Zwischenkreises der zweiten Wechselrichterstufe 2d auf einem konstanten Wert gehalten werden.

## Patentansprüche

1. Wechselrichter (9) umfassend eine erste Wechselrichterstufe (1, 8) mit einer ersten Schaltfrequenz, eine der ersten Wechselrichterstufe (1, 8) nachgeschaltete zweite Wechselrichterstufe (2) mit einer zweiten Schaltfrequenz, und eine Steuer- und/oder Regeleinheit,
wobei die erste Wechselrichterstufe (1, 8) eine erste Zwischenspannung aufweist und zum Erzeugen einer ersten pulsweitenmodulierten Wechselspannung mit wenigstens drei unterschiedlichen Spannungspegeln ausgebildet ist, wobei sich die unterschiedlichen Spannungspegel jeweils durch wenigstens eine erste Differenzspannung unterscheiden, wobei die erste Wechselrichterstufe (1, 8) mindestens eine Anschlussschaltung aufweist, wobei die Anschlussschaltung jeweils eine Ausgangsklemme aufweist, und diese Ausgangsklemme eine Ausgangsklemme der ersten Wechselrichterstufe (1, 8) zum Erzeugen der ersten pulsbreitenmodulierten Wechselspannung bildet,
wobei die zweite Wechselrichterstufe (2) eine zweite Zwischenspannung aufweist, welche zweite Zwischenspannung kleiner der ersten Zwischenspannung und größer der ersten Differenzspannung ist, und wobei die zweite Schaltfrequenz größer der ersten Schaltfrequenz ist, wobei die zweite Wechselrichterstufe (2) einen Zwischenkreiskondensator (95) aufweist,
wobei der Wechselrichter (9) ein Ausgangsfilter (3) aufweist, welches nachfolgend der zweiten Wechselrichterstufe (2) angeordnet ist,
**dadurch gekennzeichnet, dass** die Anschlussschaltung weiters eine gekoppelte Spulenanordnung (12, 82, 83) und eine Gruppe von mindestens zwei parallel geschalteten und phasenversetzt mit der ersten Schaltfrequenz pulsbreitenmoduliert angesteuerten Brückenzweigen aufweist,
dass jeder der Brückenzweige einen Mittenanschluss aufweist und die Mittenanschlüsse dieser Brückenzweige zum Superponieren der Ausgangsspannungen der einzelnen Brückenzweige über die gekoppelte Spulenanordnung (12, 82, 83) an die Ausgangsklemme angeschlossen sind,
dass die Steuer- und/oder Regeleinheit ein Referenzsignal für die Pulsbreitenmodulation der zweiten Wechselrichterstufe (2) berechnet, indem die Steuer- und/oder Regeleinheit ein erstes Referenzsignal (refᵥ) und ein zweites Referenzsignal (ref_{dc}) addiert,
dass die Steuer- und/oder Regeleinheit das erste Referenzsignal (refᵥ) durch Normierung oder Normalisieren einer Differenzspannung (Δv_{AM}) mit einem Sollwert der zweiten Zwischenkreisspannung (V_{DC2*}) der zweiten Wechselrichterstufe (2) erzeugt, wobei die Differenzspannung (Δv_{AM}) die Differenz zwischen der ideal an das Ausgangsfilter (3) anzulegenden Spannung und der von der ersten Wechselrichterstufe (1) tatsächlich erzeugten Spannung ist,
dass der Wechselrichter (9) weiters einen Zwischenkreisspannungsregler (PI) aufweist, welcher aus der Abweichung der gemessenen Zwischenkreisspannung (V_{DC2}) der zweiten Wechselrichterstufe (2) von ihrem Sollwert (V_{DC2*}) eine Größe erzeugt, die einer in den Zwischenkreiskondensator (95) einzuspeisenden oder daraus abzuführenden Leistung entspricht, wobei die Steuer- und/oder Regeleinheit das zweite Referenzsignal (ref_{dc}) durch Multiplizieren der Ausgangsgröße des Zwischenkreisspannungsreglers (PI) mit einem Sollwert des Ausgangsstromes (i_{L1*}) erzeugt
und dass die Steuer- und/oder Regeleinheit eine Pulsweitenmodulation der zweiten Wechselrichterstufe (2) mittels eines sägezahnförmigen Trägersignals steuert.

2. Wechselrichter (9) nach Anspruch 1, **dadurch gekennzeichnet, dass** die Spulenanordnung dazu eingerichtet ist, Gleichtaktströme, die von den Mittenanschlüssen einer Gruppe von Brückenzweigen zum entsprechenden Ausgangsklemme fließen, zu glätten.

3. Wechselrichter (9) nach Anspruch 1 oder 2, **dadurch gekennzeichnet, dass** die Spulenanordnung dazu eingerichtet ist, Gegentaktströme, die von den Mittenanschlüssen einer Gruppe von Brückenzweigen zum entsprechenden Ausgangsklemme fließen, zu unterdrücken.

4. Wechselrichter (9) nach einem der Ansprüche 1 bis 3, **dadurch gekennzeichnet, dass** die zweite Wechselrichterstufe (2) in Serie zu einer Ausgangsklemme der ersten Wechselrichterstufe (1, 8) angeschlossen ist, und eine Ausgangsspannung der zweiten Wechselrichterstufe (2) zur ersten pulsbreitenmodulierten Wechselspannung (v_{AM}) addiert wird.

5. Wechselrichter (9) nach einem der Ansprüche 1 bis 3, **dadurch gekennzeichnet, dass** die erste Wechselrichterstufe (1, 8) mindestens eine erste und eine zweite Anschlussschaltung mit einer ersten respektive zweiten Ausgangsklemme der ersten Wechselrichterstufe (1, 8) aufweist, und die zweite Wechselrichterstufe (2) eine erste Eingangsklemme (Q) und eine zweite Eingangsklemme (R) und eine Ausgangsklemme (S) aufweist, mit ihren Eingangsklemmen (Q, R) zwischen die erste und die zweite Ausgangsklemme der ersten Wechselrichterstufe (1, 8) geschaltet ist, und dazu eingerichtet ist, eine Spannung an ihrer Ausgangsklemme (S) auf einen Wert zwischen den Spannungen an ihren Eingangsklemmen (Q, R) einzustellen.

6. Wechselrichter (9) nach einem der Ansprüche 1 bis 5, **dadurch gekennzeichnet, dass** die einzelnen Brücken-Halbleiterschaltungen (11, 81) der ersten Wechselrichterstufen (1, 8) derart überlagert geschaltet werden, dass zu wenigstens einem vorgebbaren Zeitpunkt wenigstens zwei der Brücken-Halbleiterschaltungen (11, 81) gleichzeitig eingeschaltet sind, zur Erzeugung der wenigstens drei unterschiedlichen Spannungspegel.

7. Wechselrichter (9) nach einem der Ansprüche 1 bis 6, **dadurch gekennzeichnet, dass** die Steuer- und/oder Regeleinheit dazu ausgebildet ist, den Zwischenkreiskondensator (95) der zweiten Wechselrichterstufe (2) bei einem Start des Wechselrichters (9) auf eine vorgegebene Spannung zu laden, und diese Spannung während des Betriebes des Wechselrichters (9) im zeitlichen Mittel konstant zu halten.

8. Wechselrichter (9) nach einem der Ansprüche 1 bis 7, **dadurch gekennzeichnet, dass** die Halbleiterschalter der ersten Wechselrichterstufe (1, 8) eine höhere Sperrspannung aufweisen, als Halbleiterschalter der zweiten Wechselrichterstufe (2).

## Claims

1. Inverter (9) comprising a first inverter stage (1, 8) having a first switching frequency, a second inverter stage (2) having a second switching frequency, said second inverter stage being downstream of the first inverter stage (1, 8), and a control and/or regulation unit, wherein the first inverter stage (1, 8) has a first intermediate voltage and is designed to generate a first pulse-width-modulated alternating voltage with at least three different voltage levels, wherein the different voltage levels differ in each case by at least a first differential voltage, wherein the first inverter stage (1, 8) has at least one connection circuit, wherein the connection circuit in each case has an output terminal, and said output terminal forms an output terminal of the first inverter stage (1, 8) for generating the first pulse-width-modulated alternating voltage,
wherein the second inverter stage (2) has a second intermediate voltage, which second intermediate voltage is smaller than the first intermediate voltage and greater than the first differential voltage, and wherein the second switching frequency is greater than the first switching frequency, wherein the second inverter stage (2) has an intermediate circuit capacitor (95),
wherein the inverter (9) has an output filter (3) which is arranged after the second inverter stage (2),
**characterized in that** the connection circuit additionally has a coupled coil assembly (12, 82, 83) and a group of at least two parallel-connected bridge branches which are actuated out of phase with the first switching frequency in a pulse-width-modulated manner,
**in that** each of the bridge branches has a central connection and the central connections of these bridge branches are connected to the output terminal via the coupled coil assembly (12, 82, 83) in order to superimpose the output voltages of the individual bridge branches,
**in that** the control and/or regulation unit calculates a reference signal for the pulse width modulation of the second inverter stage (2) by the control and/or regulation unit adding together a first reference signal (refᵥ) and a second reference signal (ref_{dc}),
**in that** the control and/or regulation unit generates the first reference signal (refᵥ) by standardizing or normalizing a differential voltage (Δv_{AM}) with a setpoint value of the second intermediate circuit voltage (V_{DC2*}) of the second inverter stage (2), wherein the differential voltage (Δv_{AM}) is the difference between the voltage that is ideally to be applied to the output filter (3) and the voltage that is actually generated by the first inverter stage (1),
**in that** the inverter (9) additionally has an intermediate circuit voltage controller (PI) which generates, from the deviation of the measured intermediate circuit voltage (V_{DC2}) of the second inverter stage (2) from its setpoint value (V_{DC2*}), a quantity corresponding to a power that is to be fed into or discharged from the intermediate circuit capacitor (95), wherein the control and/or regulation unit generates the second reference signal (ref_{dc}) by multiplying the output quantity of the intermediate circuit voltage controller (PI) by a setpoint value of the output current (i_{L1*}),
and **in that** the control and/or regulation unit controls a pulse width modulation of the second inverter stage (2) by means of a sawtooth-shaped carrier signal.

2. Inverter (9) according to claim 1, **characterized in that** the coil assembly is designed to smooth common-mode currents flowing from the central connections of a group of bridge branches to the corresponding output terminal.

3. Inverter (9) according to claim 1 or 2, **characterized in that** the coil assembly is designed to suppress differential-mode currents flowing from the central connections of a group of bridge branches to the corresponding output terminal.

4. Inverter (9) according to any one of claims 1 to 3, **characterized in that** the second inverter stage (2) is connected in series with an output terminal of the first inverter stage (1, 8), and an output voltage of the second inverter stage (2) is added to the first pulse-width-modulated alternating voltage (V_{AM}).

5. Inverter (9) according to any one of claims 1 to 3, **characterized in that** the first inverter stage (1, 8) has at least a first and a second connection circuit having respectively a first and a second output terminal of the first inverter stage (1, 8), and the second inverter stage (2) has a first input terminal (Q) and a second input terminal (R) and an output terminal (S), is connected with its input terminals (Q, R) between the first and the second output terminal of the first inverter stage (1, 8), and is designed to adjust a voltage at its output terminal (S) to a value between the voltages at its input terminals (Q, R).

6. Inverter (9) according to any one of claims 1 to 5, **characterized in that** the individual bridge semiconductor circuits (11, 81) of the first inverter stages (1, 8) are connected in an overlapping manner such that, at least at one predefinable point in time, at least two of the bridge semiconductor circuits (11, 81) are switched on simultaneously in order to generate the at least three different voltage levels.

7. Inverter (9) according to any one of claims 1 to 6, **characterized in that** the control and/or regulation unit is designed to charge the intermediate circuit capacitor (95) of the second inverter stage (2) to a predefined voltage when the inverter (9) is started, and to keep this voltage constant on average over time during operation of the inverter (9).

8. Inverter (9) according to any one of claims 1 to 7, **characterized in that** the semiconductor switches of the first inverter stage (1, 8) have a higher blocking voltage than semiconductor switches of the second inverter stage (2).

## Revendications

1. Onduleur (9) comprenant un premier étage d'onduleur (1, 8) commuté à une première fréquence de commutation, un deuxième étage d'onduleur (2) connecté en aval du premier étage d'onduleur (1, 8) et commuté à une deuxième fréquence de commutation, et une unité de commande et/ou de régulation,
dans lequel le premier étage d'onduleur (1, 8) présente une première tension intermédiaire et est conçu pour générer une première tension alternative modulée en largeur d'impulsion avec au moins trois niveaux de tension différents, dans lequel les différents niveaux de tension diffèrent chacun d'au moins une première tension différentielle, dans lequel le premier étage d'onduleur (1, 8) présente au moins un circuit de connexion, dans lequel chaque circuit de connexion présente une borne de sortie, et cette borne de sortie forme une borne de sortie du premier étage d'onduleur (1, 8) pour générer la première tension alternative modulée en largeur d'impulsion,
dans lequel le deuxième étage d'onduleur (2) présente une deuxième tension intermédiaire, laquelle deuxième tension intermédiaire est inférieure à la première tension intermédiaire et supérieure à la première tension différentielle, et dans lequel la deuxième fréquence de commutation est supérieure à la première fréquence de commutation, dans lequel le deuxième étage d'onduleur (2) présente un condensateur de circuit intermédiaire (95),
dans lequel l'onduleur (9) présente un filtre de sortie (3) qui est disposé à la suite du deuxième étage d'onduleur (2),
**caractérisé en ce**
**que** le circuit de connexion présente en outre un agencement de bobines couplées (12, 82, 83) et un groupe d'au moins deux branches de pont connectées en parallèle et commandées de façon modulée en largeur d'impulsion et en décalage de phase avec la première fréquence de commutation,
**que** chacune des branches de pont présente une connexion centrale et que les connexions centrales de ces branches de pont sont connectées à la borne de sortie par l'intermédiaire de l'agencement de bobines couplées (12, 82, 83) pour superposer les tensions de sortie des différentes branches de pont,
**que** l'unité de commande et/ou de régulation calcule un signal de référence pour la modulation en largeur d'impulsion du deuxième étage d'onduleur (2) en additionnant un premier signal de référence (refᵥ) et un deuxième signal de référence (ref_{dc}),
**que** l'unité de commande et/ou de régulation génère le premier signal de référence (refᵥ) en normalisant une tension différentielle (ΔV_{AM}) avec une valeur de consigne de la deuxième tension de circuit intermédiaire (V_{DC2*}) du deuxième étage d'onduleur (2), la tension différentielle (ΔV_{AM}) étant la différence entre la tension devant être idéalement appliquée au filtre de sortie (3) et la tension effectivement générée par le premier étage d'onduleur (1),
**que** l'onduleur (9) présente en outre un régulateur de tension de circuit intermédiaire (PI) qui génère, à partir de l'écart entre la tension de circuit intermédiaire mesurée (V_{DC2}) du deuxième étage d'onduleur (2) et sa valeur de consigne (V_{DC2*}), une grandeur qui correspond à une puissance à injecter dans le condensateur de circuit intermédiaire (95) ou à dissiper de celui-ci, l'unité de commande et/ou de régulation générant le deuxième signal de référence (ref_{dc}) en multipliant la grandeur de sortie du régulateur de tension de circuit intermédiaire (PI) par une valeur de consigne du courant de sortie (i_{L1*}), et
**que** l'unité de commande et/ou de régulation commande une modulation en largeur d'impulsion du deuxième étage d'onduleur (2) au moyen d'un signal porteur en dents de scie.

2. Onduleur (9) selon la revendication 1, **caractérisé en ce que** l'agencement de bobines est conçu pour lisser les courants en mode commun qui circulent des connexions centrales d'un groupe de branches de pont vers la borne de sortie correspondante.

3. Onduleur (9) selon la revendication 1 ou 2, **caractérisé en ce que** l'agencement de bobines est conçu pour supprimer les courants en mode différentiel qui circulent des connexions centrales d'un groupe de branches de pont vers la borne de sortie correspondante.

4. Onduleur (9) selon l'une des revendications 1 à 3, **caractérisé en ce que** le deuxième étage d'onduleur (2) est connecté en série à une borne de sortie du premier étage d'onduleur (1, 8), et une tension de sortie du deuxième étage d'onduleur (2) est additionnée à la première tension alternative modulée en largeur d'impulsion (V_{AM}).

5. Onduleur (9) selon l'une des revendications 1 à 3, **caractérisé en ce que** le premier étage d'onduleur (1, 8) présente au moins un premier et un deuxième circuit de connexion avec respectivement une première et une deuxième borne de sortie du premier étage d'onduleur (1, 8), et le deuxième étage d'onduleur (2) présente une première borne d'entrée (Q) et une deuxième borne d'entrée (R) ainsi qu'une borne de sortie (S), est connecté avec ses bornes d'entrée (Q, R) entre les première et deuxième bornes de sortie du premier étage d'onduleur (1, 8) et est conçu pour régler une tension à sa borne de sortie (S) à une valeur comprise entre les tensions à ses bornes d'entrée (Q, R).

6. Onduleur (9) selon l'une des revendications 1 à 5, **caractérisé en ce que** les différents circuits à semi-conducteurs en pont (11, 81) des premiers étages d'onduleur (1, 8) sont connectés de manière superposée de telle sorte qu'à au moins un instant prédéfinissable, au moins deux des circuits à semi-conducteurs en pont (11, 81) soient activés simultanément pour générer lesdits au moins trois niveaux de tension différents.

7. Onduleur (9) selon l'une des revendications 1 à 6, **caractérisé en ce que** l'unité de commande et/ou de régulation est conçue pour charger le condensateur de circuit intermédiaire (95) du deuxième étage d'onduleur (2) à une tension prédéfinie lors d'un démarrage de l'onduleur (9), et pour maintenir cette tension constante en moyenne dans le temps pendant le fonctionnement de l'onduleur (9).

8. Onduleur (9) selon l'une des revendications 1 à 7, **caractérisé en ce que** les commutateurs à semi-conducteurs du premier étage d'onduleur (1, 8) présentent une tension de blocage plus élevée que les commutateurs à semi-conducteurs du deuxième étage d'onduleur (2).
